(19) **Europäisches Patentamt / European Patent Office / Office européen des brevets**

(11) **EP 2 816 736 B1**

(12) **EUROPEAN PATENT SPECIFICATION**

(45) Date of publication and mention
of the grant of the patent:
**18.05.2016 Bulletin 2016/20**

(51) Int Cl.:
*H04B 5/00* (2006.01)

(21) Application number: **13368018.1**

(22) Date of filing: **18.06.2013**

(54) **Adaptive bit-loading in NFC**

Adaptive Bit-Zuweisung in NFC

Chargement binaire adaptatif dans NFC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(72) Inventor: **Dhayni, Achraf
06220 Vallauris (FR)**

(74) Representative: **Hutchinson, Thomas Owen
Riviera Patents
27B avenue Joseph Giordan
06200 Nice (FR)**

(43) Date of publication of application:
**24.12.2014 Bulletin 2014/52**

(73) Proprietor: **ST-Ericsson SA
1228 Plan-les-Ouates (CH)**

(56) References cited:
**EP-A1- 2 518 905      GB-A- 2 443 234
US-A1- 2007 014 341      US-A1- 2010 181 961**

Printed by Jouve, 75001 PARIS (FR)

**Description**

This invention relates to Near Field Communications (NFC) between an NFC-enabled reader device, referred to hereinafter as an "NFC reader" and an NFC-enabled target device, such as an NFC tag or NFC tag emulator, referred to hereinafter as an "NFC tag". In particular, the invention relates to a method and apparatus for optimising the data transmission rate (the bit loading) in relation to the maximum available data transmission rate (the bit rate) for a particular NFC reader and NFC tag pair exchanging data via an NFC connection.

The correct selection of bit loading is necessary to preserve data integrity when transmitting data wirelessly between two NFC-enabled devices. If the bit loading is too high, then data errors may occur, whereas if the bit loading is too low, although the error rate may be thus reduced, the latency (time it takes to exchange data between the devices) may become unacceptably high.

Bit-loading is a concept that is used today in OFDM Telecommunication and wireless systems where the receiver can send the channel information to the transmitter. According to the channel information, the transmitter calculates the appropriate bit-loading (transmission bitrate) in order to transmit the maximum of information. This is described, for example, in the paper by H. Schantz, "A near-field propagation law and a novel fundamental limit to antenna gain versus size", IEEE Antenna & Propagation Society International Symposium, vol. 3B, pp. 134-137, July, 2005.

Further examples of known NFC bit loading arrangements are described in European patent publication number EP2518905 and in UK patent publication number GB2443234.

Such set-ups, however, require a pre-exchange of information, which can add to latency, and do not take into account transient factors, such as relative movement of the NFC reader and target, ambient conditions etc.

Moreover, whilst it is apparent that adaptive bit-loading would be useful in NFC to maximize the benefit of the near-field channel capacity, so far bit-loading has not been introduced into NFC implementations because it has hitherto not been possible to assess the quality of the channel. In NFC, the channel is mostly imposed by the circuitry of the Tag and the Reader that are near each other.

A need therefore exists for a way to determine, dynamically, the bit rate and an appropriate bit loading before, and for on-going, wireless data, and in particular, NFC exchanges.

According to the invention, there is provided an NFC reader and a method of determining the near-field free-space channel capacity of an NFC connection as set forth in the appendent claims.

An embodiment of the invention therefore suitably provides a method of determining the channel capacity of an NFC connection as a metric that reflects the channel quality needed for bit-loading.

An embodiment of the invention suitably provides a method that enables an NFC reader to calculate, on-chip, the near-field free-space channel capacity, and optionally, thereafter, to calculate the maximum bitrate that can be sent and received over the channel.

An embodiment of the invention suitably provides an NFC reader that measures the near-field free-space channel capacity and determines the maximum bit loading for optimal transmission and reception of data to, and from, respectively, an NFC tag.

An aspect provides an NFC reader that measures the near-field free-space channel capacity between the reader and an NFC tag, the reader further comprising: a transmitter and a receiver each operatively connected to an antenna; a first peak detector adapted to measure an amplitude of a transmission current in the antenna as emitted by the transmitter; a second peak detector adapted to measure an amplitude of a reception current in the antenna as received by the receiver and a noise detector operatively coupled to the antenna for determining a level of noise in a signal in the antenna.

Suitably, either or both of the first and second peak detectors comprise a negative clamping circuit for clamping a differential sinusoidal signal in the antenna to generate an analogue output representative of the peak value. An ADC may be provided for converting the analogue output (68) into a digital output (72).

The noise detector suitably comprises an RMS meter, and may optionally comprise an ADC for converting an analogue output of the noise detector into a digital output.

The NFC reader suitably comprises a processor, which is suitably operatively connected for receiving the digital outputs of the ADC corresponding to the first and second measured peak values and the measured noise value. A memory may also be provided for storing transmission and/or reception parameters of the NFC reader.

An aspect provides a method of determining the near-field free-space channel capacity of an NFC connection, comprising the steps of: measuring an amplitude of a transmission current in an antenna of an NFC reader as emitted by its transmitter; measuring an amplitude of a reception current in the antenna as received by a receiver of the NFC reader; measuring a noise level in a signal in the antenna; and calculating from these measured parameters, the said near-field free-space channel capacity.

The near-field free-space channel capacity is calculated by the steps of: calculating a value for Pa being half of the square of the measured Pa peak value; calculating a value for Ps being half of the square of the measured Ps peak value; calculating a value for N being the square of the measured noise level; substituting Pa, Ps, and N into the equation: Pt = Ps.Q1. $n_1$- Pa, to calculate Pt; substituting the calculated value of Pt and the measured value of Pa into the equation: $K^2$=Pt/Pa to determine $K^2$; calculating a value of Q2 by substituting into the equation: $P_L(\omega=\omega_0) = P_s Q_1 Q_2 \eta_1 \eta_2 k^2$, the calculated $P_L$, $P_S$, and $k^2$ values, and memory-saved Q1, $\eta_1$, $\eta_2$ values; substituting the memory-saved Q1, and the calculated Q2, values into the equation:

$$B_f = \frac{B}{f_0} = \frac{\sqrt{-(Q_1^2 + Q_2^2) + \sqrt{(Q_1^2 + Q_2^2)^2 + 4Q_1^2 Q_2^2}}}{\sqrt{2}Q_1 Q_2}$$

to calculate $B_f$; calculating $P_L$ using the equation: $P_L$ = Pt. $n_2$; and calculating the channel capacity C by substituting the calculated $P_L$, $B_f$, and N values into the equation: $C = B_f f_0 \log_2(1 + \frac{P_L}{N})$.

A further step of calculating a maximum bitrate that can be sent and received over the channel may be employed, and the bit loading may be adjusting to match the calculated maximum bitrate. The near-field free-space channel capacity is suitably calculated as a worst-case near-field free-space channel capacity.

Suitably, the near-field free-space channel capacity (C) is measured in bits per second. Optimal transmission and reception of data is suitably a condition whereby a maximum amount of data can be sent and received via the available NFC connection.

The NFC reader comprises a transmitter and a receiver that are each operatively connected to an antenna, and further comprises a first peak detector adapted to measure an amplitude of a transmission current in the antenna as emitted by the transmitter, a second peak detector adapted to measure an amplitude of a reception current in the antenna as received by the receiver and a noise detector operatively coupled to the antenna for determining a level of noise in a signal in the antenna.

The first and/or second peak detectors may comprise negative clamping circuits, whereby the peak values are suitably determined by clamping the differential sinusoidal signal in order to generate, for example, by zero-crossing, a half-period clock being a sample-and-hold that samples and holds the signal at its peaks. The peak value of the signal(s) can be fed to an input of an analogue-to-digital converter (ADC) to be digitized before being processed by a processor of the NFC reader.

The noise detector is suitably an RMS meter. Suitably, because the NFC reader is coupled to an NFC tag during an NFC exchange, the noise detector can be configured to measure the noise of the system, i.e. the combined noise of the NFC reader and an NFC tag coupled thereto.

The peak value and noise measurements can be used to determine, via calculation, the near-field free-space channel capacity.

An embodiment of the invention shall now be described, by way of example only, with reference to the accompanying drawings in which:

    Figure 1 is a schematic graph showing the bandwidth of a loading resonator circuit as energy versus frequency;
    Figure 2 is a schematic circuit diagram of a known NFC reader coupled to a nearby NFC tag;
    Figure 3 is an equivalent circuit model of inductively coupled near field communication systems;
    Figure 4 is a schematic system diagram of an NFC pair; and
    Figure 5 is a schematic block diagram of the peak detectors of Figure 4.

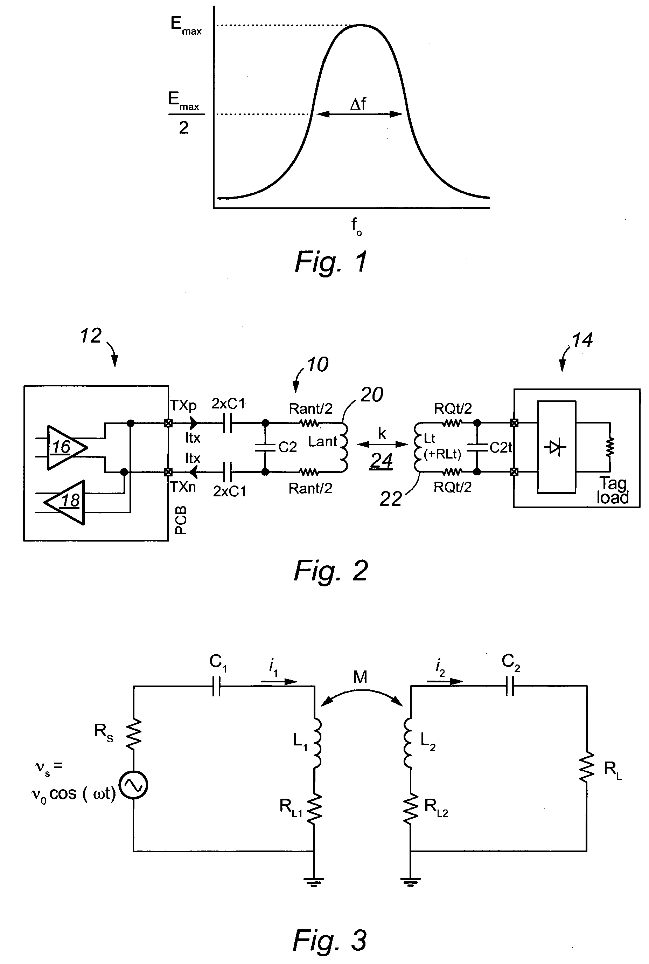

Referring to Figures 1 and 2, an NFC set-up 10 comprises an NFC reader 12 and an NFC tag 14. The NFC reader 12 comprises a transmitter 16 and a receiver 18, which are operatively connected to an antenna 20. The reader's antenna 20 couples to an antenna 22 of the tag 14, effectively forming an air-core transformer, which enables data (and power in many cases) to be exchanged between the antennae 20, 22 via an induced RF field 24 in the free space between the two.

In NFC circuits, a resonating circuit is created by the following components, as indicated in Figure 2:

    The antenna matching circuit components (C1, C2, and Rant)
    The antenna inductance (Lant)
    The nearby tag 14 load
    The antenna to antenna coupling factor (k)
    The NFC transmitter 16 source impedance

In an NFC environment, the resonating circuit loads the reader's transmitter 16 and the load of the resonating circuit, as seen at the output of the reader's transmitter (TXp and TXn) is determined by the quality factor (Q) of the resonating circuit. The quality factor (Q) characterises the resonating circuit bandwidth relative to its center frequency (or resonance frequency, $f_0$) as shown in Figure 1.

In Figure 1, the bandwidth Df of the loading resonator circuit is shown on a graph of energy versus frequency. The Q factor of the resonator, or filter, is given by $f_o$/Df. The higher the Q, the narrower (sharper) and higher the peak is.

In the time domain, a higher Q indicates a lower rate of energy loss relative to the stored energy of the resonator, that is to say, the oscillations die out more slowly. For large values of Q, the Q factor is approximately the number of oscillations required for a freely oscillating system's energy to fall off to about 0.2%, of its original energy.

In the frequency domain, a higher Q indicates a higher attenuation of the reader's transmitter 16 signal frequency components below and above the center frequency. In other words, the rise and fall times of the reader's transmitter 14 are longer, which limits the maximum possible bitrate in the NFC's Amplitude Shift Keying (ASK), which is a modulation type for the reader's transmitter signal. The carrier frequency of the ASK transmitter signal is referred to as fc herein.

With regard to the reader's transmitter signal, a higher Q also indicates a lower attenuation of the reader's transmitter signal frequency components near the resonance frequency $f_0$.

From design considerations, the values of C1, C2, Rant, Lant, tag load, k and NFC transmitter 16 source impedance are selected such that:

The quality factor is as high as possible in order to have the lowest attenuation of the data frequency components of the reader's transmitter signal. This leads to a higher output power efficiency of the transmitter signal at TXp/n. A higher output power efficiency is equivalent to having a higher current flowing in the NFC circuit antenna, thus giving rise to a higher generated magnetic field; and

The quality factor is as low as possible in order to attain smaller rise and fall times in the transmitter signal at TXp/n. Having smaller rise and fall times means that higher bitratescan be transmitted on the transmitter signal at TXp/n.

Obviously, these are competing requirements, and so a compromise needs to be struck between the output power efficiency and the maximum bitrate when choosing the quality factor value.

An inductively-coupled NFC system can be modeled by the equivalent circuit model shown in Figure 3 in which:

Vs is a source sinusoidal voltage delivered by the reader's power amplifier;
Rs is the source resistance of the reader's power amplifier;
C1 is the total capacitance of the reader circuit, matching circuit, and antenna 20;
L1 and RL1 are, respectively, the inductance and parasitic resistance of the reader's antenna 20;
$R_L$ is the load resistance of the tag 14 circuit;
C2 is the total capacitance of the tag circuit 14, matching circuit, and antenna 22;
L2 and $R_{L2}$ are, respectively, the inductance and parasitic resistance of the tag's antenna 22; and
M is the mutual inductance that models the inductive coupling between the reader 12 and the tag 14 antennas 20, 22.

The channel capacity can be calculated for the communication system shown in Figure 3 by using the coupling coefficient k to qualitatively model the coupling of the two antennae 20, 22 according to equation 1 below:

$$k = \frac{M}{\sqrt{L_1 L_2}}$$

(1)

For the case where there are two parallel coils centered on a single axis with $r_2 \leq r_1$ (which is the case in NFC applications), the coupling coefficient can be derived as:

$$k(x) = \frac{r_1^2 r_2^2}{\sqrt{r_1 r_2}(\sqrt{x^2 + r_1^2})^3}$$

(2)

Since the channel capacity is being measured to determine the maximum possible bitrate, the worst-case channel capacity must be determined by assuming that both the reader 12 and the tag 14 are as if they resonate at the same angular resonant frequency. Whilst this is rarely the case in reality, this assumption should be used to determine the worst-case channel capacity:

$$\omega_0 = \frac{1}{\sqrt{L_1 C_1}} = \frac{1}{\sqrt{L_2 C_2}}$$

(3)

Where $w_0$ is the angular resonant frequency. Then the currents $i_1$ and $i_2$ are given by:

$$i_2(\omega) = \frac{j\omega k \sqrt{L_1 L_2} i_1}{(R_{L2} + R_L)(1 + j\frac{2Q_2 \Delta\omega}{\omega_0})}$$

(4)

$$i_1(\omega) = \frac{v_0}{(R_{L1} + R_s)(1 + j\frac{2Q_1 \Delta\omega}{\omega_0})}$$

(5)

Such that:

$$\Delta\omega = \omega - \omega_0 \qquad Q_1 = \frac{\omega_0 L_1}{R_{L1} + R_s}, \qquad Q_2 = \frac{\omega_0 L_2}{R_{L2} + R_L}$$

Q1 and Q2 being the quality factors of the reader 12 and tag 14, respectively. Therefore, the received power at the load $R_L$ is given by:

$$P_L = \frac{1}{2} |i_2|^2 R_L$$

(6)

After substituting equation (4) and (5) into (6), the following can be derived:

$$P_L(\omega) = \frac{P_s Q_1 Q_2 \eta_1 \eta_2 k^2}{(1 + Q_1^2 \frac{(2\Delta\omega)^2}{\omega_0^2})(1 + Q_2^2 \frac{(2\Delta\omega)^2}{\omega_0^2})}$$

(7)

Where:

$$P_s = \frac{1}{2} \frac{v_0^2}{R_s}$$

(8)

$$\eta_1 = \frac{R_s}{R_{L1} + R_s}, \qquad \eta_2 = \frac{R_L}{R_{L2} + R_L}$$

(9)

Ps being the total power delivered by the source of the reader 12 and where $\eta_1$ and $\eta_2$ are the efficiencies of the reader 12 and tag 14 circuits, respectively. The 3dB fractional bandwidth of the near field channel can thus be calculated from (7) from the following:

$$(10) \quad B_f = \frac{B}{f_0} = \frac{\sqrt{-(Q_1^2 + Q_2^2) + \sqrt{(Q_1^2 + Q_2^2)^2 + 4Q_1^2 Q_2^2}}}{\sqrt{2}Q_1 Q_2}$$

where $B$ is the 3dB bandwidth in Hz and $f_0$ is the center frequency (which is usually 13.56MHz in most NFC applications). According to the Shannon-Hartley theorem, which yields the maximum rate at which information can be transmitted over a communications channel having a specified bandwidth in the presence of noise, the capacity of a communication system is strongly related to the 3dB bandwidth of the system. From the Shannon-Hartley theorem, the capacity of this inductive coupling near field communication system in free space is given by:

$$(11) \quad C = B_f f_0 \log_2(1 + \frac{P_L}{N})$$

Where $P_L$ is the "signal", N is the total noise power over the bandwidth (which is usually dominated by the thermal noise of both the tag 14 and reader 12 circuitry), and where C is the capacity in bits per second.

The example comprises the reader 12 measuring the capacity C, to enable it to determine the maximum possible bitrate that can be transferred over the NFC system, the NFC system being the reader 12, the tag 14 and a near field coupling channel between them.

As such, the reader 12 needs to measure the capacity C, and this is accomplished, by measuring $B_f$, $P_L$, and N, as set forth in equation (11).

N, of course, can be easily measured by a noise power meter that is often embedded in the reader's circuitry for normal operational purposes. Measuring the noise is a well-known task, and so details about how this is done are not explained in detail herein.

However, the reader 12 measures $B_f$ and $P_L$ as follows:

From equation (7), it is possible to derive that:

$$(12) \quad P_L(\omega = \omega_0) = P_s Q_1 Q_2 \eta_1 \eta_2 k^2$$

The quality factor Q1 and transmission efficiency $\eta_1$ of the reader 12 are known quantities, and the reader 12 can easily measure on-chip the delivered power (Ps) of its source using a classical embedded power meter, signal strength meter, or a peak detector. The reader 12 can also, using a similar meter/detector, measure the output power (Pa) of its antenna. By doing the differentiation Ps.Q1. $\eta_1$- Pa, the reader 12 can calculate the power (Pt) transferred to the nearby tag 14. Thus:

$$(13) \quad Pt = Ps.Q1. \eta_1 - Pa$$

Then, by dividing Pt by Pa the coupling factor can be calculated as:

$$(14) \quad K^2 = Pt/Pa$$

Further, by definition:

$$(15) \quad P_L = Pt. \eta_2$$

Therefore, using the parameter derived from equation (12), the reader 12 still has to know $\eta_2$ in order to calculate Q2. But $\eta_2$ is the reception efficiency of the nearby NFC tag 14, and *its* value can be approximated at 78% (a figure that is accepted as being accurate for most, if not all NFC tags 14 currently on the market).

As such, the reader 12 can calculate and/or measure all the parameters in equation (12) above, and can thus obtain a value for Q2 by substituting $P_L$, Ps,Q1, $\eta_1$, $\eta_2$, and $k^2$ into equation (12).

Thereafter, the value of $B_f$ can be calculated by substituting Q1 and the above calculated Q2 into equation (10). Finally, $B_f$ and $P_L$ and N are substituted into equation (11) to calculate C.

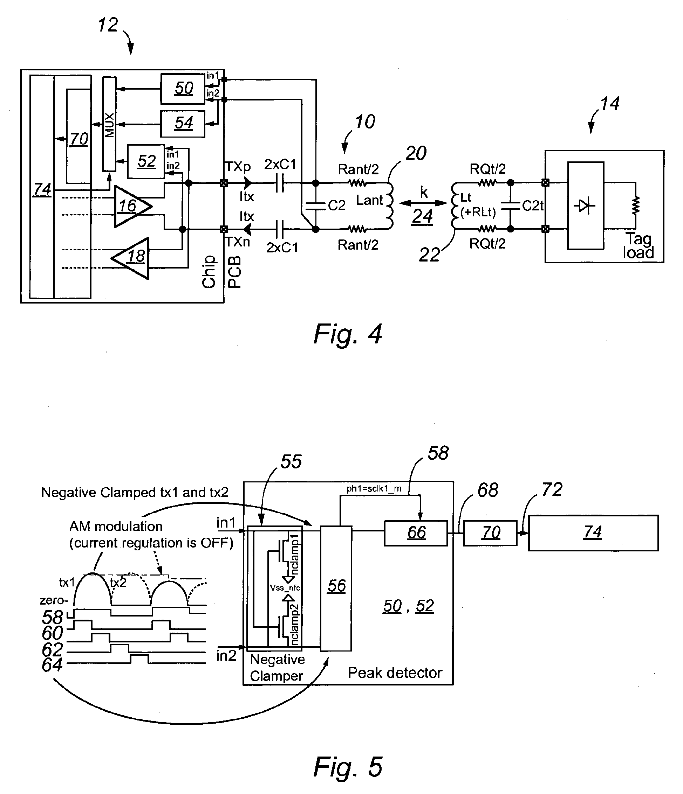

In order to be able to do this, the reader 12 needs to be provided with power measurement circuitry to measure each of Pa and Ps. This can be accomplished, as shown in Figure 4, by adding a pair of peak detectors 50, 52, and a noise detector 54. In the illustrated embodiment, the noise detector 54 is an RMS (root-mean-square) meter, which measures the noise of the system (N) as a whole because all of the reader's noise is present internally in the reader 12 and so can be detected directly; but also, all of the tag's 14 noise is detectable, via inductive coupling to the reader 12.

In Figure 5, it can be seen that the peak detectors 50, 52 comprise a negative clamper 54, which is triggered by a clock generator 56 that generates four quarter duty cycle clocks 58, 60, 62, 64, each offset by 91 degrees, and applies two of them to the gates of the transistors of the negative clamper 54. The peak values are thus derived by a sampler 66 that samples and holds the sinusoidal input signal tx1, tx2 as it peaks, the output 68 being passed into an ADC 70 where it is converted into a digital signal 72 representative of the peak values, which is passed to a processor 74.

Now, let Pa_peak and Ps_peak be the peaks of Pa and Ps as measured by the two peak detectors 50, 52. Let Nrms be the RMS value of the noise as measured by the RMS meter 54. Pa_peak, Ps_peak, and Nrms are then digitized and sent to the on-chip NFC digital processor/controller 74 where Pa, Ps and N are calculated as follows:

Pa = (Pa_peak)$^2$/2 because the antenna signal is sinusoidal and thus its power is half the square of its peak;

Ps = (Ps_peak)$^2$/2 because the antenna signal is sinusoidal and thus its power is also half the square of its peak; and

N = (Nrms)$^2$ because, by definition, the power is the square of the RMS value.

Once these values are known, the step of calculating the near-filed free-space channel capacity, C, is performed as follows:

The digital values of Pa, Ps, and N are substituted (by the digital processor 74) into equation (13) above to calculate Pt;

The calculated value of Pt and the measured value of Pa are substituted into equation (14) to find $K^2$;

The processor 74 then calculates Q2 by substituting into equation (12) the calculated $P_L$, Ps, and $k^2$ values, and the memory-saved Q1, $\eta_1$, $\eta_2$ values;

The memory-saved Q1, and the calculated Q2, values are used by the processor 74 to calculate $B_f$ via equation (10);

The processor 74 uses equation (15) to calculate $P_L$; and

The processor 74 calculates the channel capacity C by substituting the calculated $P_L$, $B_f$, and N into equation (11).

The examples therefore provide any one or more of the group comprising: a method of measuring the actual near-field channel capacity by the reader; a method facilitating making the maximum use of the available capacity of an NFC channel that exists when a reader 12 and a tag 14 are brought into proximity; the ability of an NFC reader 12 to adapt the bit loading dynamically according to instantaneous conditions and/or the kind/type/design of the nearby tag 14; an NFC reader 12 having peak detectors that can be implemented with minimal silicon overhead because peak detectors and RMS meters are usually available on-chip for normal operation of existing NFC devices-they just need to be re-allocated and a relatively simple processing method that can be easily achieved within an acceptable processing time and with acceptable power consumption overhead.

**Claims**

1. An NFC reader (12) adapted to determine the near-field free-space channel capacity between the reader (12) and an NFC tag (14), the reader further comprising: a transmitter (16) and a receiver (18) each operatively connected to an antenna (20); a first peak detector (50) adapted to measure an amplitude of a transmission current in the antenna (20) as emitted by the transmitter (16); a second peak detector (52) adapted to measure an amplitude of a reception current in the antenna (20) as received by the receiver (18) and a noise detector (54) operatively coupled to the antenna (20) for determining a level of noise in a signal in the antenna (20), the NFC reader (12) further comprising a processor (74) and a memory for storing transmission and/or reception parameters of the NFC reader (12), wherein the processor is adapted to determine the near-field free-space channel capacity from these measured and stored parameters by: calculating a value for Pa, antenna output power, being half of the square of the measured Pa peak value; calculating a value for Ps, delivered source power, being half of the square of the measured Ps peak value; calculating a value for N, the noise of the system, being the square of the measured noise level; substituting Pa, Ps, and N into the equation: Pt = Ps.$Q_1$. $\eta_1$-Pa, to calculate Pt; the power transferred to the nearby tag, where $Q_1$ is the quality factor and where $\eta_1$ is the efficiency of the reader circuit; substituting the calculated value of Pt and the measured value of Pa into the equation: $K^2$ = Pt/Pa to determine $K^2$, K being the antenna to antenna coupling factor; calculating a value of $Q_2$ by substituting into the equation: $P_L(\omega = \omega_0) = P_S Q_1 Q_2 \eta_1 \eta_2 K^2$ the calculated

$P_L$, $P_S$, and $k^2$ values, and memory-saved $Q_1, \eta_1$, $\eta_2$ values, $Q_2$ being the quality factor and $\eta_2$ being the efficiency of the tag circuit; substituting the memory-saved $Q_1$, and the calculated $Q_2$, values into the equation:

$$B_f = \frac{B}{f_0} = \frac{\sqrt{-(Q_1^2 + Q_2^2) + \sqrt{(Q_1^2 + Q_2^2)^2 + 4Q_1^2 Q_2^2}}}{\sqrt{2}Q_1 Q_2}$$,

, where $f_0$ is the resonance frequency and B the 3dB band width, to calculate $B_f$; calculating $P_L$ using the equation: $P_L = Pt. \eta_2$, where $P_L$ is the received power at a load and calculating the channel capacity C by substituting the calculated $P_L$, $B_f$, and N values into the equation:

$$C = B_f f_0 \log_2(1 + \frac{P_L}{N})$$

2. An NFC reader (12) according to claim 1, wherein either or both of the first (50) and second (52) peak detectors comprise a negative clamping circuit (55) clamping a differential sinusoidal signal in the antenna (20) to generate an analogue output (68) representative of the peak value.

3. An NFC reader (12) according to claim 2, further comprising an ADC (70) for converting the analogue output (68) into a digital output (72).

4. An NFC reader (12) as claimed in any of claims 1 to 3, wherein the noise detector (54) comprises an RMS meter.

5. An NFC reader (12) according to claim 4, further comprising an ADC (70) for converting an analogue output of the noise detector (54) into a digital output (72).

6. An NFC reader as claimed in any preceding claim, wherein the processor (74) is operatively connected for receiving the digital outputs of the ADC (70) corresponding to the first and second measured peak values and the measured noise value.

7. A method of determining the near-field free-space channel capacity of an NFC connection, comprising the steps of: measuring an amplitude of a transmission current in an antenna (20) of an NFC reader (12) as emitted by its transmitter (16); measuring an amplitude of a reception current in the antenna (20) as received by a receiver (18) of the NFC reader (12); measuring a noise level in a signal in the antenna (20); and calculating from these measured parameters by a processor of the NFC reader, the said near-field free-space channel capacity, wherein the near-field free-space channel capacity is calculated by: calculating a value for Pa, antenna output power, being half of the square of the measured Pa peak value; calculating a value for Ps, delivered source power, being half of the square of the measured Ps peak value; calculating a value for N, the noise of the system, being the square of the measured noise level; substituting Pa, Ps, and N into the equation: Pt = Ps.$Q_1$.$\eta_1$-Pa, to calculate Pt, the power transferred to the nearby tag, where $Q_1$ is the quality factor and where $\eta_1$ is the efficiency of the reader circuit; substituting the calculated value of Pt and the measured value of Pa into the equation: $K^2$ = Pt/Pa to determine $K^2$, K being the antenna to antenna coupling factor; calculating a value of $Q_2$ by substituting into the equation:

$P_L(\omega = \omega_0) = P_S Q_1 Q_2 \eta_1 \eta_2 K^2$ the calculated $P_L$, Ps, and $k^2$ values, and memory-saved $Q_1, \eta_1$, $\eta_2$ value, $Q_2$ being the quality factor and $\eta_2$ being the efficiency of the tag circuit; substituting the memory-saved $Q_1$ and the calculated $Q_2$, values into the equation:

$$B_f = \frac{B}{f_0} = \frac{\sqrt{-(Q_1^2 + Q_2^2) + \sqrt{(Q_1^2 + Q_2^2)^2 + 4Q_1^2 Q_2^2}}}{\sqrt{2}Q_1 Q_2}$$

where $f_0$ is the resonance frequency and B the 3dB bandwidth, to calculate $B_f$; calculating $P_L$ using the equation: $P_L = Pt. \eta_2$, where $P_L$ is the received power at a boad; and calculating the channel capacity C by substituting the calculated $P_L$, $B_f$, and N values into the equation:

$$C = B_f f_0 \log_2(1 + \frac{P_L}{N})$$

8. The method of claim 7, further comprising the step of calculating a maximum bitrate that can be sent and received over the channel.

9. The method of claim 8, further comprising adjusting the bit loading to match the calculated maximum bitrate.

10. The method of claim 9, wherein the wherein the near-field free-space channel capacity is calculated as a worst-case near-field free-space channel capacity.

**Patentansprüche**

1. NFC-Lesevorrichtung (12), welche dafür geeignet ist, die Nahfeld-Freiraum-Kanalkapazität zwischen der Lesevorrichtung (12) und einem NFC-Etikett (14) zu bestimmen, wobei die Lesevorrichtung ferner umfasst: einen Sender (16) und einen Empfänger (18), die jeweils operativ mit einer Antenne (20) verbunden sind; einen ersten Spitzenwert-Detektor (50), der dafür geeignet ist, eine Amplitude eines Sendestroms in der Antenne (20) zu messen, wie von dem Sender (16) emittiert; einen zweiten Spitzenwert-Detektor (52), der dafür geeignet ist, eine Amplitude eines Empfangsstroms in der Antenne (20) zu messen, wie von dem Empfänger (18) empfangen; und einen Rauschdetektor (54), der operativ mit der Antenne (20) verbunden ist, zum Bestimmen eines Rauschpegels in einem Signal in der Antenne (20), wobei die NFC-Lesevorrichtung (12) ferner einen Prozessor (74) und einen Speicher zum Speichern von Sende- und/oder Empfangsparametern der NFC-Lesevorrichtung (12) umfasst, wobei der Prozessor dafür geeignet ist, aus diesen gemessenen und gespeicherten Parametern die Nahfeld-Freiraum-Kanalkapazität zu bestimmen durch: Berechnen eines Werts für Pa, die Antennenausgabeleistung, der die Hälfte des Quadrats des gemessenen Pa-Spitzenwerts beträgt; Berechnen eines Werts für Ps, die übermittelte Quellenleistung, der die Hälfte des Quadrats des gemessenen Ps-Spitzenwerts beträgt; Berechnen eines Werts für N, das Rauschen des Systems, der das Quadrat des gemessenen Rauschpegels beträgt; Einsetzen von Pa, Ps und N in die Gleichung: Pt = Ps · $Q_1$ · $\eta_1$ - Pa, um Pt, die zu dem nahegelegenen Etikett übertragene Leistung, zu berechnen, wobei $Q_1$ der Qualitätsfaktor ist und wobei $\eta_1$ die Effizienz der Schaltung der Lesevorrichtung ist; Einsetzen des berechneten Werts von Pt und des gemessenen Werts von Pa in die Gleichung $K^2$ = Pt/Pa, um $K^2$ zu bestimmen, wobei K der Antenne-Antenne-Kopplungsfaktor ist; Berechnen eines Werts $Q_2$ durch Einsetzen der berechneten $P_L$-, Ps- und $k^2$-Werte und im Speicher gespeicherter $Q_1$-, $n_1$-, $n_2$- Werte in die Gleichung: $P_L$ ($\omega = \omega_0$) = $P_S Q_1 Q_2 \eta_1 \eta_2 k^2$, wobei $Q_2$ der Qualitätsfaktor ist und $\eta_2$ die Effizienz der Etikettenschaltung ist; Einsetzen des im Speicher gespeicherten $Q_1$-Werts und des berechneten $Q_2$-Werts in die Gleichung

$$B_f = \frac{B}{f_0} = \frac{\sqrt{-(Q_1^2 + Q_2^2) + \sqrt{(Q_1^2 + Q_2^2)^2 + 4Q_1^2 Q_2^2}}}{\sqrt{2}Q_1 Q_2},$$

wobei $f_0$ die Resonanzfrequenz und B die 3dB-Bandbreite ist, um $B_f$ zu berechnen; Berechnen von $P_L$ unter Verwendung der Gleichung $P_L = P_t \cdot \eta_2$, wobei $P_L$ die empfangene Leistung bei einer Last ist; und Berechnen der Kanalkapazität C durch Einsetzen der berechneten $P_L$-, $B_f$- und N-Werte in die Gleichung:

$$C = B_f f_0 \log_2(1 + \frac{P_L}{N})$$

**2.** NFC-Lesevorrichtung nach Anspruch 1, wobei einer oder beide aus dem ersten (50) und zweiten (52) Spitzenwertdetektor eine negative Klemmschaltung (55) umfassen, welche ein differentielles sinusförmiges Signal in der Antenne (20) klemmt, um eine analoge Ausgabe (68) zu erzeugen, welche den Spitzenwert repräsentiert.

**3.** NFC-Lesevorrichtung nach Anspruch 1, ferner umfassend einen ADC (70) zum Umwandeln der analogen Ausgabe (68) in eine digitale Ausgabe (72).

**4.** NFC-Lesevorrichtung nach einem der Ansprüche 1 bis 3, wobei der Rauschdetektor (54) eine RMS-Messvorrichtung umfasst.

**5.** NFC-Lesevorrichtung nach Anspruch 4, ferner umfassend einen ADC (70) zum Umwandeln einer analogen Ausgabe des Rauschdetektors (54) in eine digitale Ausgabe (72).

**6.** NFC-Lesevorrichtung nach einem der vorhergehenden Ansprüche, wobei der Prozessor (74) operativ zum Empfangen der digitalen Ausgaben des ADC (70) verbunden ist, welche dem ersten und zweiten gemessenen Spitzenwert und dem gemessenen Rauschwert entsprechen.

**7.** Verfahren zum Bestimmen der Nahfeld-Freiraum-Kanalkapazität einer NFC-Verbindung, umfassend die Schritte: Messen einer Amplitude eines Sendestroms in einer Antenne (20) einer NFC-Lesevorrichtung (12), wie von ihrem Sender (16) emittiert; Messen einer Amplitude eines Empfangsstroms in der Antenne (20), wie von einem Empfänger (18) der NFC-Lesevorrichtung (12) empfangen; Messen eines Rauschpegels in einem Signal in der Antenne (20); und Berechnen der Nahfeld-Freiraum-Kanalkapazität aus diesen gemessenen Parametern durch einen Prozessor der NFC-Lesevorrichtung (12), wobei die Nahfeld-Freiraum-Kanalkapazität berechnet wird durch: Berechnen eines Werts für Pa, die Antennenausgabeleistung, der die Hälfte des Quadrats des gemessenen Pa-Spitzenwerts beträgt; Berechnen eines Werts für Ps, die übermittelte Quellenleistung, der die Hälfte des Quadrats des gemessenen Ps-Spitzenwerts beträgt; Berechnen eines Werts für N, das Rauschen des Systems, der das Quadrat des gemessenen Rauschpegels beträgt; Einsetzen von Pa, Ps und N in die Gleichung: Pt = Ps · $Q_1$ · $\eta_1$ - Pa, um Pt, die zu dem nahegelegenen Etikett übertragene Leistung, zu berechnen, wobei $Q_1$ der Qualitätsfaktor ist und wobei $\eta_1$ die Effizienz der Schaltung der Lesevorrichtung ist; Einsetzen des berechneten Werts von Pt und des gemessenen Werts von Pa in die Gleichung $K^2$ = Pt/Pa, um $K^2$ zu bestimmen, wobei K der Antenne-Antenne-Kopplungsfaktor ist; Berechnen eines Werts $Q_2$ durch Einsetzen der berechneten $P_L$-, Ps- und $k^2$-Werte und im Speicher gespeicherter $Q_1$-, $\eta_1$-, $\eta_2$- Werte in die Gleichung: $P_L$ ($\omega = \omega_0$) = $P_S Q_1 Q_2 \eta_1 \eta_2 k^2$, wobei $Q_2$ der Qualitätsfaktor ist und $\eta_2$ die Effizienz der Etikettenschaltung ist; Einsetzen des im Speicher gespeicherten $Q_1$-Werts und des berechneten $Q_2$-Werts in die Gleichung

$$B_f = \frac{B}{f_0} = \frac{\sqrt{-(Q_1^2 + Q_2^2) + \sqrt{(Q_1^2 + Q_2^2)^2 + 4Q_1^2 Q_2^2}}}{\sqrt{2}Q_1 Q_2} ,$$

wobei $f_0$ die Resonanzfrequenz und B die 3dB-Bandbreite ist, um $B_f$ zu berechnen; Berechnen von $P_L$ unter Verwendung der Gleichung $P_L$ = $P_t$ · $\eta_2$, wobei $P_L$ die empfangene Leistung bei einer Last ist; und Berechnen der Kanalkapazität C durch Einsetzen der berechneten $P_L$-, $B_f$- und N-Werte in die Gleichung:

$$C = B_f f_0 \log_2(1 + \frac{P_L}{N})$$

**8.** Verfahren nach Anspruch 7, ferner umfassend den Schritt des Berechnens einer maximalen Bitrate, die über den Kanal gesendet und empfangen werden kann.

**9.** Verfahren nach Anspruch 8, ferner umfassend das Einstellen der Bitzuweisung, so dass sie zu der berechneten maximalen Bitrate passt.

**10.** Verfahren nach Anspruch 9, wobei die Nahfeld-Freiraum-Kanalkapazität als eine Nahfeld-Freiraum-Kanalkapazität des ungünstigsten Falls berechnet wird.

**Revendications**

**1.** Lecteur NFC (12) adapté pour déterminer la capacité d'une voie en espace libre en champ proche entre le lecteur (12) et une étiquette NFC (14), le lecteur comprenant en outre : un émetteur (16) et un récepteur (18) connectés chacun de manière fonctionnelle à une antenne (20) ; un premier détecteur de crête (50) adapté pour mesurer une amplitude d'un courant d'émission dans l'antenne (20) comme étant émis par l'émetteur (16) ; un second détecteur de crête (52) adapté pour mesurer une amplitude d'un courant de réception dans l'antenne (20) comme étant reçu par le récepteur (18) et un détecteur de bruit (54) couplé de manière fonctionnelle à l'antenne (20) pour la détermination d'un niveau de bruit dans un signal dans l'antenne (20), le lecteur NFC (12) comprenant en outre un processeur (74) et une mémoire destinés au stockage des paramètres d'émission et/ou de réception du lecteur NFC (12), dans lequel le processeur est adapté pour déterminer la capacité d'une voie en espace libre en champ proche à partir de ces paramètres mesurés et stockés en calculant une valeur pour $P_a$, puissance de sortie de l'antenne, étant la moitié du carré de la valeur de crête $P_a$ mesurée ; en calculant une valeur pour $P_s$, puissance source fournie, étant la moitié du carré de la valeur de crête $P_s$ mesurée ; en calculant une valeur pour N, le bruit du système, étant le carré du niveau de bruit mesuré ; en substituant $P_a$, $P_s$ et N dans l'équation : $Pt = P_s.Q_1.\eta_1-Pa$, afin de calculer Pt ; la puissance transférée à l'étiquette proche, où Q1 est le facteur de qualité et où $\eta1$ est l'efficacité du circuit du lecteur ; en substituant la valeur calculée de Pt et la valeur mesurée de $P_a$ dans l'équation : $K^2 = P_t/P_a$ afin de déterminer $K^2$, K étant le facteur de couplage entre deux antennes ; en calculant une valeur de $Q_2$ par substitution dans l'équation : $P_L(\omega=\omega_0) = P_s Q_1 Q_2 \eta_1 \eta_2 K^2$, les valeurs calculées $P_L$, $P_s$ et $K^2$, ainsi que les valeurs $Q_1$, $\eta_1$, $\eta_2$ sauvegardées en mémoire, $Q_2$ étant le facteur de qualité et $\eta_2$ étant l'efficacité du circuit de l'étiquette ; en substituant les valeurs $Q_1$ sauvegardée en mémoire, et $Q_2$ calculée dans l'équation :

$$B_f = \frac{B}{f_0} = \frac{\sqrt{-(Q_1^2 + Q_2^2) + \sqrt{(Q_1^2 + Q_2^2)^2 + 4Q_1^2 Q_2^2}}}{\sqrt{2}Q_1 Q_2}$$

où, $f_0$ est la fréquence de résonnance et B la bande passante à 3 dB pour calculer $B_f$ ; en calculant $P_L$ à l'aide de l'équation $P_L = P_{t.}\eta_2$ ; où $P_L$ est la puissance reçue à une certaine charge et en calculant la capacité d'une voie C en substituant les valeurs calculées $P_L$, $B_f$ et N dans l'équation :

$$C = B_f f_0 \log_2(1 + \frac{P_L}{N})$$

**2.** Lecteur NFC (12) selon la revendication 1, dans lequel l'un ou les deux des premier détecteur de crête (50) et second détecteur de crête (52) comprennent un circuit de calage négatif (55) calant un signal sinusoïdal différentiel dans l'antenne (20) pour générer une sortie analogique (68) représentative de la valeur de crête.

**3.** Lecteur NFC (12) selon la revendication 2, comprenant en outre un CAN (70) pour la conversion de la sortie analogique (68) en une sortie numérique (72).

**4.** Lecteur NFC (12) selon l'une quelconque des revendications 1 à 3, dans lequel le détecteur de bruit (54) comprend un appareil de mesure de la valeur efficace.

**5.** Lecteur NFC (12) selon la revendication 4, comprenant en outre un CAN (70) pour la conversion d'une sortie analogique du détecteur de bruit (54) en une sortie numérique (72).

**6.** Lecteur NFC selon l'une quelconque des revendications précédentes, dans lequel le processeur (74) est connecté de manière fonctionnelle pour la réception des sorties numériques du CAN (70) correspondant à la première et à la seconde valeur de crête mesurée et à la valeur de bruit mesurée.

**7.** Procédé de détermination de la capacité d'une voie en espace libre en champ proche d'une connexion NFC, comprenant les étapes de : mesure d'une amplitude d'un courant d'émission dans une antenne (20) d'un lecteur NFC (12) tel qu'émis par son émetteur (16) ; mesure d'une amplitude d'un courant de réception dans l'antenne (20) tel que reçu par un récepteur (18) du lecteur NFC (12) ; mesure d'un niveau de bruit dans un signal dans l'antenne (20) ; et calcul à partir de ces paramètres mesurés par un processeur du lecteur NFC de ladite capacité d'une voie en espace libre en champ proche, dans lequel la capacité d'une voie en espace libre en champ proche est calculée par : calcul d'une valeur pour $P_a$, puissance de sortie de l'antenne, étant la moitié du carré de la valeur de crête $P_a$ mesurée ; calcul d'une valeur pour $P_s$, puissance source fournie, étant la moitié du carré de la valeur de crête $P_s$ mesurée ; calcul d'une valeur pour N, le bruit du système, étant le carré du niveau de bruit mesuré, en substituant $P_a$, Ps et N dans l'équation : Pt = $P_s.Q_1.\eta_1 - P_a$, afin de calculer Pt, la puissance transférée à l'étiquette proche, où $Q_1$ est le facteur de qualité et où $\eta_1$ est l'efficacité du circuit du lecteur ; en substituant la valeur calculée de Pt et la valeur mesurée de $P_a$ dans l'équation : $K^2 = P_t/P_a$ afin de déterminer $K^2$, K étant le facteur de couplage entre deux antennes ; en calculant une valeur de $Q_2$ par substitution dans l'équation : $P_L(\omega=\omega_0) = P_sQ_1Q_2\eta_1\eta_2K^2$, les valeurs calculées $P_L$, $P_s$ et $K^2$, et les valeurs $Q_1$, $\eta_1$, $n_2$ sauvegardées en mémoire, $Q_2$ étant le facteur de qualité et $n_2$ étant l'efficacité du circuit de l'étiquette ; en substituant les valeurs $Q_1$ sauvegardées en mémoire, et les valeurs $Q_2$ calculées dans l'équation :

$$B_f = \frac{B}{f_0} = \frac{\sqrt{-(Q_1^2 + Q_2^2) + \sqrt{(Q_1^2 + Q_2^2)^2 + 4Q_1^2 Q_2^2}}}{\sqrt{2}Q_1 Q_2}$$

où $f_0$ est la fréquence de résonnance et B la bande passante à 3 dB, afin de calculer $B_f$ ; en calculant $P_L$ à l'aide de l'équation : $P_L = P_t.\eta_2$ ; où $P_L$ est la puissance reçue à une certaine charge ; et en calculant la capacité d'une voie C en substituant les valeurs calculées $P_L$, $B_f$ et N dans l'équation :

$$C = B_f f_0 \log_2(1 + \frac{P_L}{N})$$

8. Procédé selon la revendication 7, comprenant en outre l'étape de calcul d'un débit binaire maximum qui peut être envoyé et reçu sur la voie.

9. Procédé selon la revendication 8, comprenant en outre l'ajustement du chargement binaire pour correspondre au débit binaire maximum calculé.

10. Procédé selon la revendication 9, dans lequel la capacité d'une voie en espace libre en champ proche est calculée comme une capacité d'une voie en espace libre en champ proche du pire des cas.

*Fig. 1*

*Fig. 2*

*Fig. 3*

*Fig. 4*

*Fig. 5*

## REFERENCES CITED IN THE DESCRIPTION

**Patent documents cited in the description**

- EP 2518905 A

- GB 2443234 A

**Non-patent literature cited in the description**

- **H. SCHANTZ.** A near-field propagation law and a novel fundamental limit to antenna gain versus size. *IEEE Antenna & Propagation Society International Symposium,* July 2005, vol. 3B, 134-137